# EUROPÄISCHE PATENTSCHRIFT

(11) **EP 1 484 720 B1**
(45) Veröffentlichungstag und Bekanntmachung des Hinweises auf die Patenterteilung: **28.09.2005**
(21) Anmeldenummer: 03012527.2
(22) Anmeldetag: 02.06.2003
(51) Int. Cl.: G07F 7/00, G06F 17/60, H04M 17/00

(54) **Verfahren zur Vergebührung einer Dienstleistung anhand mehrerer Messgrössen und mehrerer Guthabenkonten**
Method for charging a service using several measures and prepaid accounts
Procédé de taxation d'une préstation en utilisant plusieur mesures et comptes

(43) Veröffentlichungstag der Anmeldung: 08.12.2004
(73) Patentinhaber: ORGA Systems GmbH, 33104 Paderborn (DE)
(72) Erfinder: Brajkovic, Tomas, 59558 Lippstadt (DE); Hogenkamp, Horst, 33659 Bielefeld (DE); Schwöppe, Thomas, 33102 Paderborn (DE); Osterkamp, Swen, Dr., D-33647 Bielefeld (DE); Balmosan, Alexandru-Aurel, D-33102 Paderborn (DE)
(74) Vertreter: Richardt, Markus Albert

(56) Entgegenhaltungen:
- EP-A- 1 253 771
- WO-A-01/17223
- WO-A-03/025870
- WO-A-03/026268

## Beschreibung

Die Erfindung betrifft ein Verfahren zur Vergebührung einer Dienstleistung, insbesondere eines Telekommunikationsdienstes, einer Energielieferung oder von Bezahlfernsehen ("Pay-TV") sowie ein entsprechendes Computerprogrammprodukt und ein Vergebührungssystem.

Im Stand der Technik wird aus Teilnehmersicht zwischen zwei **Bezahlungsarten** unterscheiden :
(A) Bezahlung nach Inanspruchnahme der Dienstleistung: Hierfür wird ein Vertrag zwischen Teilnehmer und Dienstleister geschlossen der in der Regel eine Grundgebühr beinhaltet die auch bezahlt werden muß, wenn für einen Zeitraum kein Ereignis eintritt. Man spricht im Englischen von Contract oder **Postpaid Billing.**
(B) Bezahlung vor Inanspruchnahme der Dienstleistung: Hier enthält der Vertrag zwischen Teilnehmer und Dienstleister in der Regel keine Grundgebühr. Man zahlt nur für die Ereignisse allerdings im voraus. Man spricht im Englischen von **Prepaid Billing.**

Für die Bezahlungsart (B) werden aus Sicht des Dienstleisters zwei **Verfahren** unterschieden :
1) Beim sogenannten **"Hot Billing"** wird nach dem das Ereignis abgeschlossen ist ein Call Data Record (CDR) erzeugt. Dies enthält unter anderem die Information über die zu vergebührenden Kosten. Die Vergebührung erfolgt direkt im Anschluß an das Ereignis auf Basis des CDR noch bevor das nächste Ereignis eintreten kann.
   Ein Nachteil dieses Verfahrens ist, dass es vorkommen kann das ein Ereignis mehr als das vorausbezahlte Guthaben kostet (engl. Last Call Syndrome).
2) Beim sogenannten "**Realtime Billing"** werden während des Ereignis Signalisierungsinformationen über das Netzwerk ausgetauscht (IN = Intelligent Network). In vordefinierten kurzen Zeitintervallen (Reportintervallen) wird anhand der Signale das Guthaben aktualisiert und überprüft ob es für das Ereignis im nächsten Zeitintervall noch ausreicht. Wenn nicht wird das Ereignis seitens des Dienstleister beendet. Neben dem prinzipiellen Vorteil, dass das vorausbezahlte Guthabenkonto nicht überzogen werden kann hat das Realtime Billing den Nachteil das der Aufwand zur Übermittlung von Signalisierungsinformationen in kurzen Zeitabständen sehr groß ist.

Ein vorteilhafte Kombination der beiden "Prepaid Billing" Varianten bezeichnet man als **"Hybrid Billing".** Dabei wird bei Unterschreitung eines kritischen Guthabenswertes von Hot auf Realtime Billing umgestellt . Ein solches System ist aus der DE10106904 bekannt.

In der W0 01/17223 "Flexible Prepaid Rates in a wireless intelligent network" vom wird ein Vergebührungsverfahren für mehrere Meßgrößen, die einem Guthabenkonto zugeordnet sind, beschrieben. Die Tarife (Kostenfunktionen der Meßgrößen) werden für jedes Ereignis aufgrund eines Parameters (SAT = Service Access Type) neu festgelegt. Es handelt sich um ein "Multi-Measure Single-Basket Realtime Billing" Verfahren.

Aus der EP 1 253 771 A1 ist ein Verfahren zum Abrechnen von Kommunikationsgebühren bekannt. Das einem Kommunikationsendgerät zugeordnete Gebührenkonto wird mit den Kommunikationsgebühren für die jeweilige Kommunikationsverbindung belastet. Ein Zusatzgebührenkonto wird neben dem Gebührenkonto zur Gebührenabrechnung verwendet. Die Kommunikationsverbindung wird hinsichtlich des Auftretens einer vorbestimmten Kommunikationsverbindungseigenschaft untersucht und in Abhängigkeit vom Auftreten der vorbestimmten Kommunikationsverbindungseigenschaft wird entweder das Gebührenkonto oder das Zusatzgebührenkonto belastet.

Aus der WO 03/026268 A2 ist ein Managementsystem für einen Pre-Paid Telekommunikationsdienst bekannt. Dabei wird ein Betrag auf der Grundlage eines Pre-Paid Kontos für die Zurverfügungstellung der Telekommunikationsdienstleistung reserviert.

Ein gemeinsamer Nachteil vorbekannter Vergebührungssysteme und Verfahren ist der für die Vergebührung erforderliche Rechenaufwand, insbesondere bei mehreren Meßgrößen und komplexen und zeitabhängigen Tarifen, sowie die Belastung des Netzwerkes mit für die Vergebührung erforderlichen Signalisierungsinformationen.

Der Erfindung liegt demgegenüber die Aufgabe zugrunde, ein verbessertes Verfahren zur Vergebührung einer Dienstleistung sowie ein entsprechendes Computerprogrammprodukt und Vergebührungssystem zu schaffen.

Die der Erfindung zugrunde liegenden Aufgaben werden jeweils mit den Merkmalen der unabhängigen Patentansprüche gelöst. Bevorzugte Ausführungsformen der Erfindung sind in den abhängigen Patentansprüchen angegeben.

Das erfindungsgemäße Verfahren ermöglicht es Dienstleitungen anhand mehrer Meßgrößen, die eindeutig mehreren Guthabenkonten zugeordnet sind, unabhängig von der Bezahlungsart und den veränderlichen Tarifen parallel zu vergebühren.

Die vorliegende Erfindung kann zur Vergebührung verschiedenster Dienstleistungen verwendet werden, insbesondere für Dienste in Telekommunikationsnetzwerken (z.B. Telefonieren und Datenaustausch in drahtgebundenen oder mobilen Netzwerken) sowie Pay-TV und Energieversorgung (z.B. Strom oder Gaslieferung). Insbesondere kann die Erfindung zur Vergebührung von über Infrastrukturnetzwerken erbrachte Dienstleistungen verwendet werden, und zwar beispielsweise für Informations- oder Datendienste und für Energieversorgungsdienstleistungen.

Als **Ereignis** wird im folgenden die Inanspruchnahme einer Dienstleistung durch einen Teilnehmer bezeichnet. Das einer Vergebührung zugrunde liegende Prinzip beschreibt, dass für jedes Ereignis mindestens eine **Meßgröße** (engl. Measure) einem **Konto** (engl. Basket) zugeordnet ist. Für die Meßgröße existiert eine **Kostenfunktion** anhand der die Kosten bestimmt werden mit denen das Konto belastet wird.

Nach einer bevorzugten Ausführungsform der Erfindung wird durch ein Teilnehmerprofil für jedes Ereignis festgelegt, welche eindeutige Zuordnung von Meßgrößen zu den Guthabenkonten zu wählen ist. Im Teilnehmerprofil kann beispielsweise generell festgelegt werden, zu welcher Zeit ein Bonusguthaben verwendet werden darf, welches vorab erworben wurde. Es ist über das Teilnehmerprofil z.B auch möglich Premiumkunden zu bestimmten Zeiten für eine Dienstleistung günstigere Tarife zu gewähren.

Erfindungsgemäß sind die verwendeten Meßgrößen auf die Zeit abbildbar. Für die nicht direkt zeitabhängigen Meßgrößen, z.B. empfangenes oder gesendetes Datenvolumen, wird dazu ein Umrechnungsfaktor zur Abbildung auf die Zeitachse definiert. Zu jeder Meßgröße gibt es eine Kostenfunktion die angibt, welche Kosten zu einem Zeitpunkt t nach dem Startzeitpunkt des Ereignisses tₛₜₐᵣₜ entstehen.

Zur Definition der Kostenfunktionen werden in der Regel linear gepulste Tarifen verwendet. Diese sind eindeutig definiert durch die Pulslänge und die Kosten pro Puls (z.B. 1.5 Ct/60 s).

Die Kostenfunktion ist in dem Fall linear gepulster Tarife eine Treppenfunktion. Den Grenzfall eines linearen Tarifes erhält man, wenn die Pulslänge die kleinst mögliche Zeiteinheit der Vergebührungssystems erreicht (z.B. 1 s).

Die Vergebührung eines Ereigniss erfolgt in der Regel in mehreren **Vergebührungsschritten** n.Innerhalb des Zeitintervalls Δt (n) eines Vergebührungschritts ändert sich weder die eindeutige Zuordnung von Meßgrößen zu Guthabenkonten noch die Kostenfunktionen der einzelnen Meßgrößen. Für den Beginn eines weiteren Vergebührungsschrittes n+1 gibt es zwei Ursachen :
(a) Das Guthaben **G**_{**j**} eines der Konten **B**_{**j**} ist leer bzw. unterhalb eines kritischen Wertes.
(b) Die Zeitbandgrenze des im Teilnehmerprofil hinterlegten Tarifs für eine der Meßgrößen **M**_{**i**} wurde erreicht.

In beiden Fällen muß für die weitere Vergebührung aller Meßgrößen daher einen neue Zuordnung **M**_{**i**} zu **B**_{**j**} gefunden werden. Die Kostenfunktion für die Meßgrößen **M**_{**i**} müßen für die weitere Vergebührung gemäß der neuen Tarifs angepasst werden.

Erfindungsgemäß erfolgt die Vergebührung so, dass für jedes der Konten **B**_{**j**} beginnend von einem Startzeitpunkt tₛₜₐᵣₜ das Zeitintervall Δt (n) bestimmt wird, währenddessen die dem betreffenden Konto zugeordneten Kostenfunktionen unverändert sind und das Konto nicht überzogen wird. Aus diesen Zeitintervallen wird das kürzeste Zeitintervall für die Durchführung eines Vergebührungsschritts gewählt.

Während dieses Zeitintervalls sind sowohl die Zuordnung der Messgrößen zu den Konten als auch die Kostenfunktionen fest. Die Vergebührung innerhalb eines solchen Zeitintervalls hat den Vorteil, dass die sich ergebenden Gebührenbeträge unabhängig von der Reihenfolge der Gebührenberechnung sind. Die Vergebührung der einzelnen Konten kann also parallel oder sequenziell für das Zeitintervall erfolgen, wobei sich unabhängig von der Reihenfolge der Bearbeitung dieselben Gebührenbeträge ergeben.

Nach einer bevorzugten Ausführungsform der Erfindung erfolgt die Bestimmung der Zeitintervalle für die einzelnen Konten so, dass der Zeitpunkt ermittelt wird, zu dem die Summe der linearisierten Kostenfunktionen, die dem betreffenden Konto zugeordnet sind, das Kontoguthaben erreicht. Von dieser Ausgangsgröße aus wird dann das tatsächliche Zeitintervall für dieses Konto schrittweise ermittelt.

Hierzu werden die Endzeitpunkte der letzten vollständigen Pulse der Kostenfunktionen, die dem Konto zugeordnet sind und die vor dem Zeitpunkt liegen, ermittelt. Diese Endzeitpunkte werden in absteigender Größe sortiert. Die sortierten Endzeitpunkte legen die Reihenfolge der schrittweisen Prüfung fest, ob für einen bestimmten Endzeitpunkt die Summe der Kostenfunktionen unterhalb des Kontoguthabens liegt. Der größte Endzeitpunkt, für den das der Fall ist, bildet die obere Intervallgrenze des für das Konto gesuchten Zeitintervalls.

Nach einer weiteren bevorzugten Ausführungsform der Erfindung werden auch die durch die Vergebührung in Zeitintervallen entstehenden zeitlichen Offsets , d.h. die Restlängen von Pulsen, mit berücksichtigt. Es kann vorkommen, dass bei einer oder mehreren der Kostenfunktionen, die innerhalb des erfindungsgemäß ermittelten Zeitintervalls vergebührt werden, ein Gebührenpuls vor der oberen Intervallgrenze beginnt und erst nach der oberen Intervallgrenze endet.

Die Vergebührung berücksichtigt aber zunächst nur die Telekommunikationsdienste während des vergebührten Zeitintervalls. Allerdings hat der Kunde darüber hinaus auch bereits Gebühren für Telekommunikationsdienste entrichtet, die den Restlängen von über das Zeitintervall hinausgehenden Pulsen entsprechen. Dies wird in dem nachfolgenden Vergebührungsschritt berücksichtigt, indem die betreffenden Kostenfunktionen um die jeweilige Restlänge verschoben werden, d. h. der erste Gebührenpuls in dem nachfolgenden Vergebührungsschritt erfolgt erst nach Ablauf der jeweiligen Restlänge.

Von besonderem Vorteil ist, dass die Vergebührung nicht ständig erfolgen muss, sondern dass eine Vergebührung innerhalb maximierter Zeitintervalle erfolgen kann, was den Datenverarbeitungsaufwand seitens des Vergebührungssystems und die Belastung des Telekommunikationsnetzwerkes mit Gebührensignalisierungsinformation minimiert. Ein weiterer Vorteil gegenüber inknementellen Lösungen, die sich puls- oder gar sekundenweise vorarbeiten, ist, dass die Vergebührung unabhängig von der Reihenfolge der Vergebührung der einzelnen Messgrößen ist.

Ein weiterer Vorteil ist, dass die Erfindung sowohl für die Hot- und Realtime-Billing als auch für hybride Billingverfahren verwendbar ist.

Im Folgenden werden bevorzugte Ausführungsformen der Erfindung mit Bezugnahme auf die Zeichnungen näher erläutert. Es zeigen:
- Figur 1: ein Blockdiagramm einer ersten Ausführungsform eines erfindungsgemäßen Vergebührungssystems,
- Figur 2: die zeitlich veränderliche Zuordnung von Messgrößen zu Konten in dem Vergebührungssystem der Figur 1,
- Figur 3: die Vorgehensweise zur Bestimmung des Zeitintervalls Δt(n) für einen Vergebührungsschritt n,
- Figur 4: ein Flussdiagramm zur Bestimmung eines Zeitintervalls Δtmaxⱼ für ein Konto Bⱼ,
- Figur 5: eine grafische Veranschaulichung des Verfahrens der Figur 4 anhand eines Kontos,
- Figur 6: ein Blockdiagramm einer weiteren Ausführungsform eines erfindungsgemäßen Vergebührungssystems unter Berücksichtigung von zeitlichen Offsets (Restlängen) vorausgegangener Vergebührungsschritte.

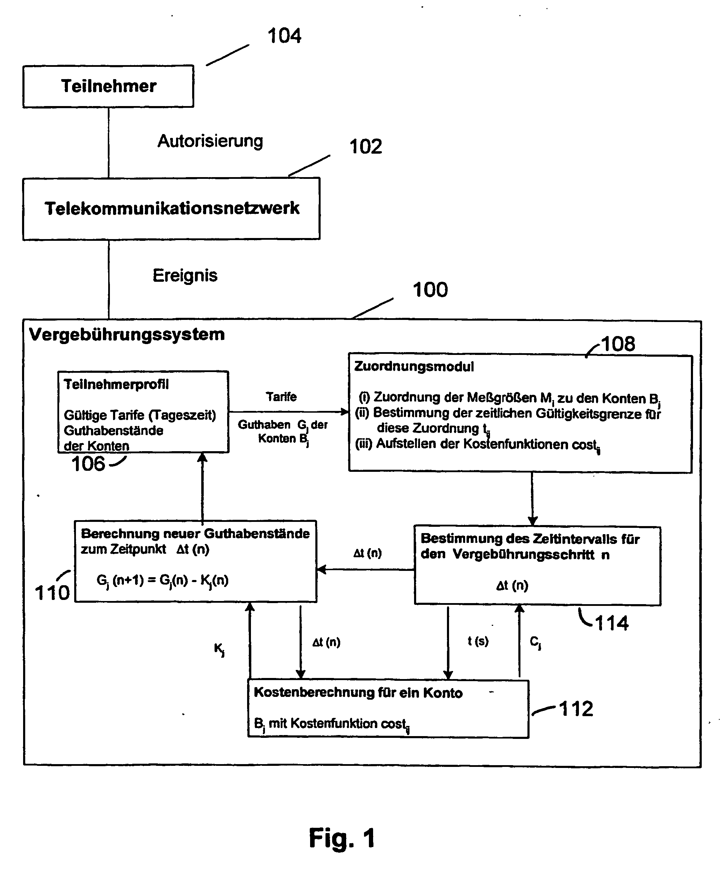

Die Figur 1 zeigt ein Vergebührungssystem 100 eines Telekommunikationsnetzwerks 102. Bei dem Telekommunikationsnetzwerk 102 handelt es sich beispielsweise um ein digitales Mobilfunknetzwerk. Das Telekommunikationsnetzwerk 102 stellt verschiedene Telekommunikationsdienstleistungen für die Teilnehmer 104 bereit.

In dem Vergebührungssystem 100 werden im Teilnehmerprofil 106 für jeden der Teilnehmer 104 ein oder mehrere Guthabenstände Gⱼ der Konten Bⱼ (0 < j < m+1) gespeichert. Das Vergebührungssystem 100 hat ferner ein Zuordnungsmodul 108 zur Zuordnung einer Anzahl k von Messgrößen Mᵢ (0<i<k+1) aus der Menge M der zur Verfügung stehenden Messgrößen zu einem der Konten Bⱼ. Die Zuordnung einer Messgröße Mᵢ zu einem Konto Bⱼ hat für einen Zeitraum tᵢⱼ Gültigkeit. Während dieses Gültigkeitszeitraumes erfolgt die Vergebührung der Messgröße Mᵢ auf das Konto Bⱼ mit der Kostenfunktion costᵢⱼ. Die über die Zeit veränderliche Zuordnung der Messgrößen zu Konten mit bestimmten Kostenfunktionen kann dabei in Abhängigkeit von einem Teilnehmerprofil und in Abhängigkeit von der Tageszeit erfolgen.

Die verschiedenen Kostenfunktionen costᵢⱼ der Konten Bj mit den Meßgrößen Mi werden vom Zuordnungsmodul 108 anhand der für den Teilnehmer gültigen Tarife festgelegt. Das Kostenberechnungsmodul 112 verwendet die Kostenfunktionen , um die Kosten für die verschiedenen Konten währende eines Vergebührungsschritt zu berechnen. Die Berechnung neuer Guthabenstände folgt im Modul 110.

Das Vergebührungssystems 100 hat ferner ein Zeitintervallberechnungsmodul 114 zur Berechnung der Endzeiten Δt (n) für jeden Vergebührungsschritt n.

Das Vergebührungssystem 100 erhält von dem Telekommunikationsnetz 102 Signalisierungsdaten, die zwischen dem Teilnehmer 104 und dem Telekommunikationsnetzwerk 102 als Grundlage für die Vergebührung ausgetauscht werden.

Beispielsweise wird der Beginn der Inanspruchnahme eines Telekommunikationsdienstes durch den Teilnehmer 104 signalisiert und zu dem Vergebührungssystem 100 übertragen. Dieses Ereignis ist durch k Meßgrößen charakterisiert. Im Teilnehmerprofil 106 wird der zur Zeit gültige Tarif und die Guthabenstände der k Konten ermittelt. Mit Hilfe des Zuordnungsmoduls 108 wird die Zuordnung der Meßgrößen zu den Konten vorgenommen.

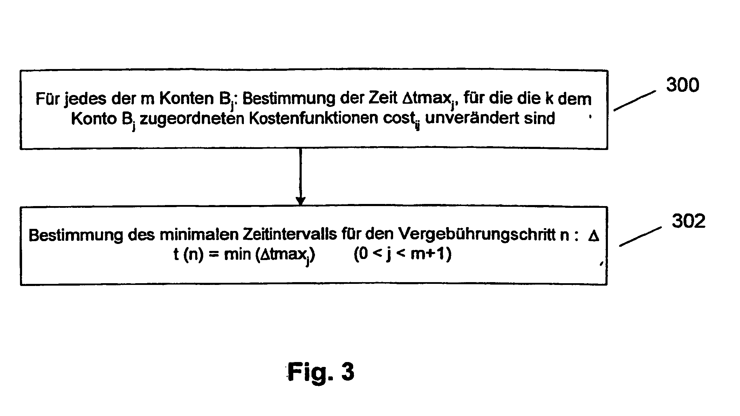

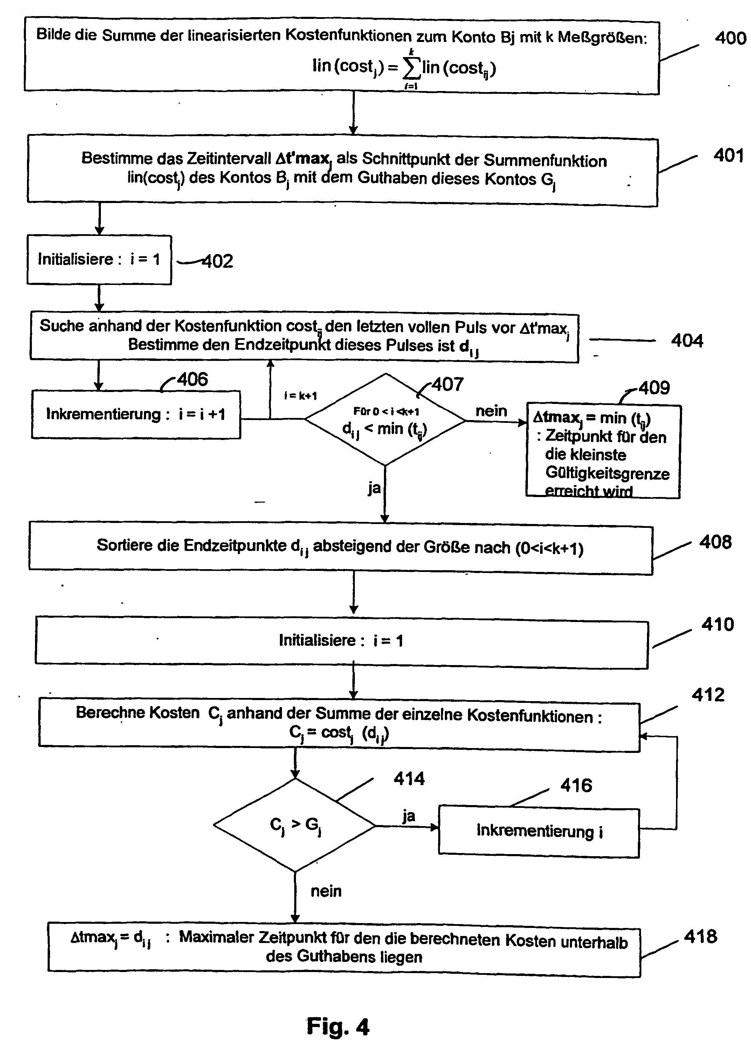

Die Bestimmung des Zeitintervalls in dem Intervallberechnungsmodul 114 folgt so, dass während des Zeitintervalls zwischen dem Beginn der Inanspruchnahme tₛₜₐᵣₜ des Telekommunikationsdienstes und der Endzeit Δt (1) des ersten Vergebührungsschritts die Zuordnung von Messgrößen zu Konten sowie die Kostenfunktionen konstant sind. Zur Durchführung dieser Berechnung greift das Zeitintervallberechnungsmodul 114 auf das Kostenberechnungsmodul 112 zu , wie mit Bezugnahme auf die Figuren 3 und 4 noch näher erläutert wird.

Die Berechnung der Guthabenbestände im Modul 110 zum Zeitpunkt Δt (1) für den ersten Vergebührungsschritt geschieht einfach durch den Aufruf des Kostenberechungsmoduls 112 und dem dekrementieren der Guthaben Gⱼ der Konten Bⱼ

Die Endzeit Δt (1) des ersten Vergebührungsschritts ist gleichzeitig die untere Intervallgrenze für die Vergebührung in dem nachfolgenden zweiten Vergebührungsschritt. Die obere Intervallgrenze Δt (2) für den zweiten Vergebührungsschritt wird wiederum durch das Zeitintervallberechnungsmodul 114 ermittelt.

Für die nachfolgenden Vergebührungsschritte kann die Berechnung neuer Guthabenstände der einzelnen Konten 110 analog erfolgen.

Wenn das Ereignis seitens der Teilnehmer des Telekommunikationsdienst vor Erreichen der oberen Intervallgrenze des letzten Vergebührungsschritts beendet wird, erfolgt die Vergebührung innerhalb dieses letzten Vergebührungsschritts entsprechend nicht bis zu der oberen Intervallgrenze, sondern bis zu dem zu diesem Endzeitpunkt.

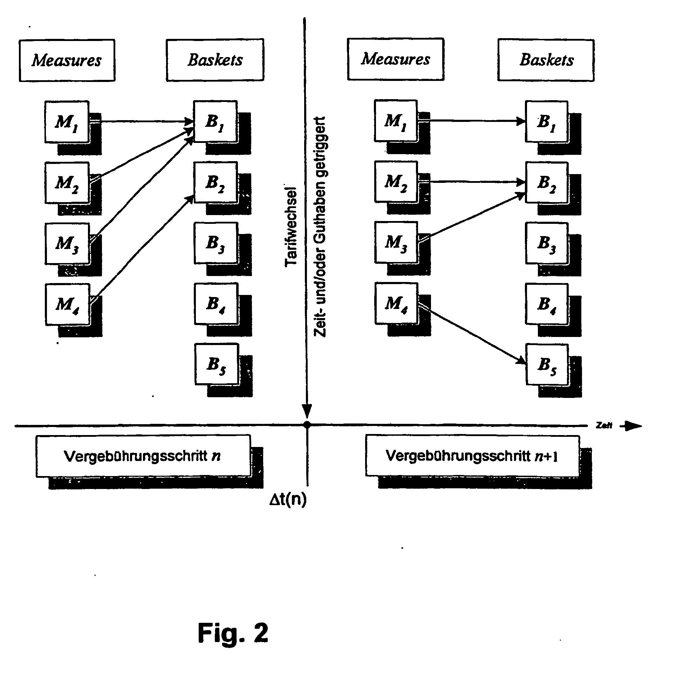

Die Figur 2 veranschaulicht die zeitliche variable Zuordnung von Messgrößen (so genannten "Measures") Mᵢ zu Konten (so genannte "Baskets") Bⱼ.

In dem hier betrachteten Fall sind exemplarisch insgesamt vier Messgrößen M₁, M₂, M₃ und M₄ vorhanden, die einer Anzahl von m = 5 Konten B₁, B₂, B₃, B₄ und B₅ zugeordnet werden können. In dem Vergebührungsschritt n sind die Messgrößen M₁ , M₂ und M₃ dem Konto B₁ zugeordnet; die Messgröße M₃ ist dem Konto B₂ zugeordnet.

Jedem sich durch die Zuordnung ergebenden Tuppel (Mᵢ, Bⱼ) ist ferner eine Kostenfunktion costᵢⱼ zugeordnet. Am Ende des Vergebührungsschritts n erfolgt ein Tarifwechsel, d. h. eine Veränderung einer oder mehrerer der Kostenfunktionen costᵢⱼ und/oder eine Veränderung der Zuordnungen von Messgrößen zu Konten.

Diese Veränderung kann durch den Stand eines Guthabens auf einem der Konten ausgelöst werden. Beispielsweise wird bei Unterschreiten eines bestimmten Mindestguthabens eine Veränderung einer der Kostenfunktionen costᵢⱼ vorgenommen oder eine der Messgrößen wird einem anderen Konto zugeordnet, da das Konto der bisherigen Zuordnung leer ist oder ein Mindestguthaben unterschritten worden ist.

Regeln für die Zuordnung von Messgrößen zu Konten und die sich daraus gebenden Kostenfunktionen sind in dem Teilnehmerprofil des betreffenden Teilnehmers hinterlegt Ein Tarifwechsel kann auch auf aufgrund einer im Tei-Inehmerprofil hinterlegten Uhrzeit sein, die erreicht wird beispielsweise Umstellung auf einen so genannten Abendtarif.

In dem nachfolgenden Vergebührungsschritt n + 1 ist dem Konto B₁ die Messgröße M₁ zugeordnet. Die Messgrößen M₁ und M₃ sind dem Konto B₂ zugeordnet; den Konten B₃ und B₄ sind keine Messgrößen zugeordnet, und dem Konto B₅ ist die Messgröße M₄ zugeordnet.

Im folgenden sind für Dienstleistungen in dem Telekommunikationsnetzwerk beispielhaft verschiedene Meßgrößen und Guthabenkonten aufgelistet. Ohne Beschränkung der Allgemeinheit wird für den Begriff Konto auch bei der Bezahlungssart (A) von einem Guthabenkonto ausgegangen, d.h. die Belastung des Kontos erfolgt nach der Inanspruchnahme. Das Kreditlimit kann hierbei ein Guthaben darstellen.

| **Messgrößen** (auf Zeit abbilddbar) z.B. | **Measures** | **Beispiele** |
|---|---|---|
| Dauer des TK-Dienstes (Gespräch, Datentransfer) | M1 | 20 min |
| Gesendetes Datenvolumen (Uplink) | M2 | 0.1 MB |
| Empfangenes Datenvolumen (Downlink) | M3 | 1 MB |

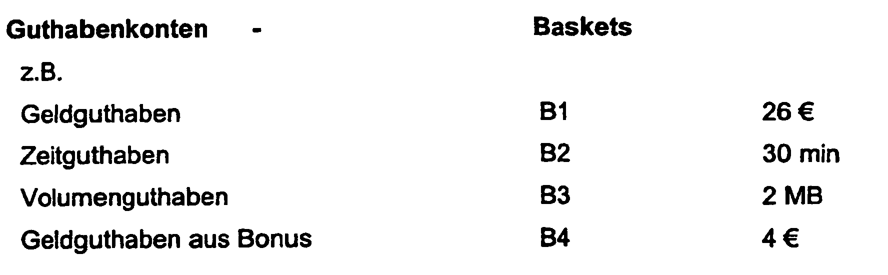

### Beispiele für typische Ereignisse bei einer Telekommunikationsdienstleistung :

1. Der Teilnehmer führt eine Telefongespräch für 20 min und sein Geldguthabenkonto wird dadurch belastet. Für dies Ereignis wird die Meßgröße M1 dem Guthabenkonto B1 zugeordnet. Dies ist ein Beispiel für den einfachsten Fall : "Single Measure - Single Basket"
2. Der Teilnehmer geht mit seinem WAP-Handy ins Internet und ruft über seinen Browser mehrere Seiten auf.
Für dies Ereignis werden beispielsweise die Meßgrößen M1 dem Guthabenkonto B2 zugeordnet und die Meßgrößen M2 und M3 dem Guthabenkonto B3.
Dies ist ein Beispiel für den allgemeinen Fall : Multi Measure - Multi Basket.

Die Figur 3 zeigt die Vorgehensweise zur Bestimmung der oberen Intervallgrenze für die Vergebührung in dem Vergebührungsschritt n. Hierzu wird in dem Schritt 300 für jedes der Konten Bⱼ des Teilnehmers das Zeitintervall Δtmaxⱼ bestimmt, für das die k Messgrößen dem betreffenden Konto Bⱼ fest zugeordnet sind und die entsprechenden Kostenfunktionen costᵢⱼ unverändert sind.

Wie mit Bezugnahme auf die Figur 4 weiter unten erläutert, bezieht sich dies sowohl auf den Fall, dass die kleinste Gültigkeitsgrenze erreicht wird (vgl. dort Schritt 409), als auch auf den maximalen Zeitpunkt für den die berechneten unterhalb des Guthabens liegen (vgl. dort Schritt 418).

Aus den für alle Konten Bⱼ bestimmten Zeitpunkten Δtmaxⱼ wird in dem Schritt 302 das Minimum ermittelt. Dieser Zeitpunkt ist die obere Intervallgrenze Δt (n) des Vergebührungsschritts n.

In der Figur 4 wird das Verfahren zur Bestimmung der Zeitpunkte Δtmaxⱼ näher erläutert.

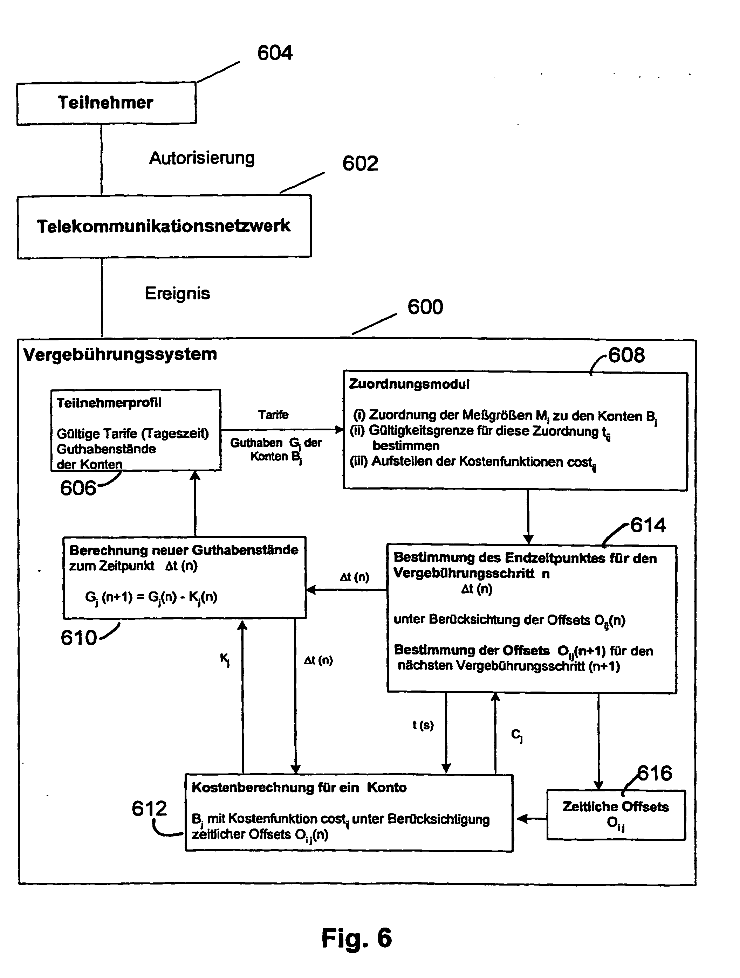

Im Schritt 400 wird die Summe der lineariserten Kostenfunktionen gebildet. Dabei können die mit Bezugnahme auf die Figur 6 weiter unten beschriebenen zeitlichen Offsets (Restlängen) der einzelnen Kostenfunktionen aus vorangegangenen Vergebührungsschritten berücksichtigt werden. Die Summe der linearisierten Kostenfunktionen ist dann eine abschnittsweise lineare Funktion.

In dem Schritt 401 wird der Schnittpunkt der Summe der lineariserten Kostenfunktionen (401) der dem Konto Bⱼ zugeordneten Kostenfunktionen costᵢⱼ mit dem auf dem Konto Bⱼ befindlichen Guthaben Gⱼ bestimmt. Aus diesem Schnittpunkt ergibt sich ein Zeitpunkt Δt'maxⱼ als Ausgangspunkt für die Bestimmung von Δtmaxⱼ.

Mit Bezugnahme auf das Beispiel der Figur 2 werden also die Kostenfunktionen cost₁₁ cost₂₁, cost₃₁ linearisiert und addiert, um die linearisierte Summenfunktion zu erhalten. Aus dem Schnittpunkt der linearisierten Summenfunktion mit dem Guthaben G₁ des Kontos B₁ ergibt sich der Zeitpunkt Δt'max₁.

In dem Schritt 402 wird der Index i initialisiert. In dem Schritt 404 wird eine der Kostenfunktionen costᵢⱼ betrachtet, die dem Konto Bⱼ zugeordnet ist. Für diese Kostenfunktion wird der letzte volle Puls ermittelt, der vor dem Zeitpunkt Δt'maxⱼ liegt.

Der Endzeitpunkt dieses letzten volles Pulses wird als Zeitpunkt dᵢⱼ gespeichert. In dem Schritt 406 wird der Index i inkrementiert, um die nächste Kostenfunktion costᵢⱼ, die dem Konto Bⱼ zugeordnet ist, zu betrachten, und den Endzeitpunkt dᵢⱼ zu bestimmen. Die Schritte 404 und 406 werden so lange wiederholt, bis sämtliche der Kostenfunktionen costᵢⱼ, die dem Konto Bⱼ zugeordnet sind, abgearbeitet worden sind, und die entsprechenden Endzeitpunkte dᵢⱼ bestimmt worden sind.

Im Schritt 407 wird überprüft ob die vorab bestimmten Endzeitpunkte dᵢⱼ kleiner als das Minimimum der im Zuordnungsmodul 108 bestimmte Gültigkeitsgrenzen t ᵢⱼ sind. Ist dies nicht der Fall, ist schon nach diesem Schritt der Zeitpunkt Δtmaxⱼ als Minimum der Gültigkeitsgrenzen t ᵢⱼ bestimmt (Schritt 409). Andernfalls fährt man mit dem Schritt 408 fort indem die Endzeitpunkte dᵢⱼ absteigend der Größe nach sortiert und entsprechend umindexiert werden.

In dem Schritt 410 wird der Index i wiederum initialisiert. In dem Schritt 412 wird die Summe der Kosten costⱼ (dᵢⱼ), die zu dem spätesten der Endzeitpunkte dᵢⱼ resultieren, berechnet. Dabei ist die Summenfunktion costⱼ die Summe der k Kostenfunktionen costᵢⱼ, die dem Konto Bⱼ zugeordnet sind.

Die sich aus der Kostenberechnung in dem Schritt 412 ergebenden Kosten cⱼ werden mit dem Guthaben Gⱼ in dem Schritt 414 verglichen. Wenn die Kosten cⱼ oberhalb des Guthabens Gⱼ liegen, wird der Index i inkrementiert, sodass die Schritte 412 und 414 für den nächsten zeitlich früheren Endzeitpunkt dᵢⱼ durchgeführt werden.

Wenn die Prüfung in den Schritt 414 ergibt, dass die Kosten cⱼ nicht oberhalb des Guthabens Gⱼ liegen, wird in dem Schritt 418 die gesuchte Zeit Δtmaxⱼ ausgegeben, welche der Endzeitpunkt dᵢⱼ ist.

Die Schritte 400 bis 418 werden für jedes der Konten Bⱼ durchgeführt, sodass für jedes der Konten Bⱼ ein Zeitpunkt Δtmaxⱼ ermittelt wird. Aus diesen Zeitpunkten Δtmaxⱼ wird gemäß Figur 3 (vergl. Schritt 302) der früheste Zeitpunkt ermittelt, welches der Endzeitpunkt t_{end} des Vergebührungsschritts n ist.

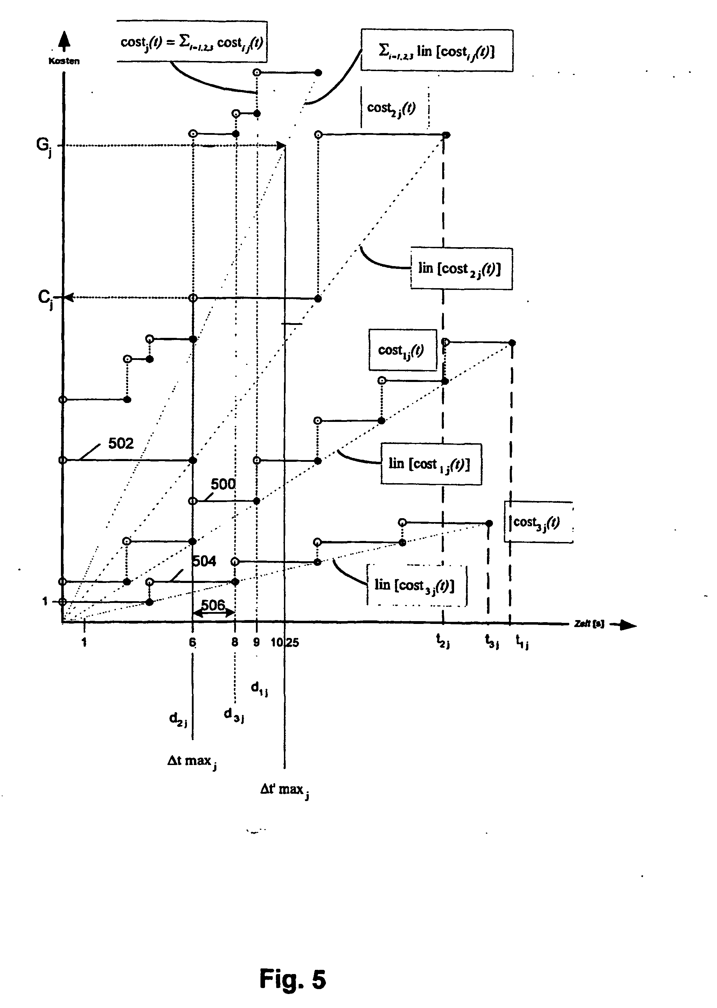

Die Figur 5 veranschaulicht diese Vorgehensweise für ein Konto Bⱼ, welches ein Guthaben Gⱼ aufweist. Dem Konto Bⱼ sind die Messgrößen M₁, M₂, M₃ mit den jeweiligen Kostenfunktionen cost₁ⱼ, cost₂ⱼ und cost₃ⱼ zugeordnet und zwar während der Gültigkeitszeiträume t₁ⱼ, t₂ⱼ bzw. t₃ⱼ.

Die Kostenfunktion costⱼ ergibt sich aus der Summe der Kostenfunktionen cost₁ⱼ, cost₂ⱼ und cost₃ⱼ.

Zur Bestimmung des Zeitpunkts Δt'maxⱼ (vergl. Schritt 400 der Figur 4) werden die linearisierten Kostenfunktionen lin (cost₁ⱼ), lin (cost₂ⱼ) und lin (cost₃ⱼ) ermittelt. Die linearisierte Gesamtkostenfunktion lin (costⱼ) wird durch die Summe der linearisierten Einzelkostenfunktionen, d. h. lin (cost₁ⱼ) + lin (cost₂ⱼ) + lin (cost₃ⱼ) erhalten.

Zunächst wird der Schnittpunkt der linearisierten Summenkostenfunktion lin (costⱼ) mit dem Guthaben Gⱼ bestimmt. Daraus erhält man den Zeitpunkt Δt'maxⱼ.

Danach wird für jede der Einzelkostenfunktionen der letzte volle Puls vor Δt'maxⱼ bestimmt (vergl. Schritte 404 und 406 der Figur 4). Für die Kostenfunktion cost₁ⱼ ist dies der Puls 500 mit dem Endzeitpunkt d₁ⱼ = 9 Sekunden, für die Kostenfunktion cost₂ⱼ ist dies der Puls 502 mit dem Endzeitpunkt d₂ⱼ = 6 Sekunden und für die Kostenfunktion cost₃ⱼ der Puls 504 mit dem Endzeitpunkt d₃ⱼ = 8 Sekunden.

Da die Endzeitpunkte alle kleiner als das Minimum der Gültigkeitsgrenzen sind (vgl. Schritt 407 Fig. 4) wird mit der Bestimmung fortgefahren. Es ergibt sich eine Reihenfolge der Endzeitpunkte von 9 Sekunden, 8 Sekunden und 6 Sekunden, und zwar absteigend der Größe nach sortiert (vergl. Schritt 408 der Figur 4).

Beginnend mit dem ersten Endzeitpunkt der sortierten Sequenz, d. h. beginnend mit dem Zeitpunkt 9 Sekunden, wird dann geprüft, ob die Summenkostenfunktion costⱼ oberhalb des Guthabens Gⱼ liegt. Für den Zeitpunkt 9 Sekunden ist dies der Fall, sodass zum nächsten Zeitpunkt in der Sequenz gegangen wird, d. h. zum Zeitpunkt 8 Sekunden.

Auch zu diesem Zeitpunkt liegt die Summenkostenfunktion costⱼ oberhalb des Guthabens Gⱼ, sodass zum nächsten Zeitpunkt der Sequenz, d. h. zum Zeitpunkt 6 Sekunden gegangen wird. Zu diesem Zeitpunkt liegt die Summenkostenfunktion costⱼ unterhalb des Guthabens Gⱼ.

Dieser Zeitpunkt ist daher der gesuchte Zeitpunkt Δtmaxⱼ.

Entsprechend wird für sämtliche der Konten Bⱼ beginnend zum Zeitpunkt 0 Sekunden, d. h. dem Beginn der Inanspruchnahme des Telekommunikationsdienstes, vorgegangen. Für nachfolgende Vergebührungsschritte ist die untere Intervallgrenze, von der aus für die Vergebührung ausgegangen wird, der Zeitpunkt Δt(1).

Im weiteren wird ohne Beschränkung der Allgemeinheit angenommen, dass Δtmaxⱼ zugleich der Zeitpunkt Δt(1) des ersten Vergebührungsschritts ist. Der Puls 504 der Kostenfunktion cost₃ⱼ beginnt vor dem Zeitpunkt Δtmaxⱼ, endet aber nach dem Zeitpunkt Δtmaxⱼ, und zwar zum Zeitpunkt 8 Sekunden. Der Teilnehmer hat also über den Zeitpunkt Δtmaxⱼ, d. h. 6 Sekunden, bereits für weitere 2 Sekunden, d. h. zwischen 6 Sekunden und 8 Sekunden, die Gebühr für die Messgröße M₃ entrichtet, obwohl der erste Vergebührungszeitraum zum Zeitraum 6 Sekunden endet.

Dies kann für den nachfolgenden Vergebührungsschritt berücksichtigt werden, indem die Kostenfunktion cost₃ⱼ um die Restlänge 506 des Pulses 504 verschoben wird, d. h. dass die Kostenfunktion cost₃ⱼ von der unteren Intervallgrenze des Vergebührungsschritts ausgehend während der Restlänge 506 zunächst 0 ist, da für diesen Zeitraum die Gebühr ja bereits entrichten worden ist. Nach der Restlänge 506 erfolgt dann der erste Gebührenimpuls gemäß der Kostenfunktion cost₃ⱼ.

Die Figur 6 zeigt ein entsprechendes Vergebührungssystem 600. Elemente der Figur 6, die Elementen der Figur 1 entsprechen, sind mit denselben, um 500 erhöhten Bezugszeichen bezeichnet.

Das Vergebührungssystem 600 hat einen Offset-Speicher 616 zur Speicherung der Restlängen von Gebührenpulsen von Kostenfunktionen, die in einem vorausgehenden Vergebührungsschritt bereits einem der Konten belastet worden sind. Die entsprechenden Restlängen bzw. Offsets werden von dem Zeitintervallberechnungsmodul 614 ermittelt und in dem Offset-Speicher 616 unter Zuordnung zu der betreffenden Kostenfunktion gespeichert. In dem nachfolgenden Vergebührungsschritt greift das Kostenberechnungsmodul 612 auf den Offset-Speicher 616 zu, um die betreffenden Kostenfunktionen um den Offset zu verschieben.

### Bezugszeichenliste

- Vergebührungssystem: 100
- Telekommunikationsnetzwerk: 102
- Teilnehmer: 104
- Teilnehmerprofil: 106
- Zuordnungsmodul: 108
- Modul zur Berechnung neuer Guthabenstände: 110
- Kostenberechnungsmodul: 112
- Intervallberechnungsmodul: 114
- Puls: 500
- Puls: 502
- Puls: 504
- Restlänge (Offset): 506
- Vergebührungssystem: 600
- Telekommunikationsnetzwerk: 602
- Teilnehmer: 604
- Teilnehmerprofil: 606
- Zuordnungsmodul: 608
- Modul zur Berechnung neuer Guthabenstände: 610
- Kostenberechnungsmodul: 612
- Zeitintervallberechnungsmodul: 614
- Speicher: 616

## Patentansprüche

1. Verfahren zur Vergebührung von Telekommunikationsdienstleistungen für einen Teilnehmer eines Telekommunikationsnetzes (102), wobei dem Teilnehmer mehrere Guthabenkonten (Bj) zugeordnet sind, und eine zeitlich veränderliche Zuordnung von Messgrößen der Telekommunikationsdienstleistungen zu den Guthabenkonten des Teilnehmer gegeben ist, und jede der Zuordnungen von Messgrößen zu Guthabenkonten eine Kostenfunktion mit einem gepulsten Tarif hat, wobei die Vergebührung in zeitlich aufeinander folgenden Vergebührungsschritten erfolgt, und für jeden der Vergebührungsschritte die folgenden Schritte durchgeführt werden:
a) für jedes der Guthabenkonten des Teilnehmers: Bestimmung eines Zeitintervalls von einer unteren Intervallgrenze ausgehend, für das die Kostenfunktion und die Zuordnungen von Meßgrößen zu dem Guthabenkonto unverändert sind und in dem ein Gebührenlimit des Guthabenkontos nicht überzogen wird,
b) Ermittlung des kürzesten der im Schritt 1 a) bestimmten Zeitintervalle,
c) Durchführung des Vergebührungsschrittes für das in Schritt 1 b) ermittelte kürzeste Zeitintervall,
wobei in jedem Vergebührungsschritt die Bestimmung einer oberen Intervallgrenze des Zeitintervalls, für das die Kostenfunktionen der Zuordnungen eines der Guthabenkonten unverändert sind, mit folgenden Schritten erfolgt:
- Bestimmung eines ersten Zeitpunkts, zu dem die Summe der Kostenfunktionen der Zuordnungen dieses Guthabenkontos das Gebührenlimit dieses Guthabenkontos erreicht,
- für jede der Kostenfunktionen einer Zuordnung dieses Guthabenkontos: Bestimmung eines Endzeitpunktes des letzten vollständigen Pulses vor Erreichen des ersten Zeitpunktes,
- Ermittlung des letzten der Endzeitpunkte, für den die Summe der Kostenfunktionen das Gebührenlimit nicht überschreitet als der oberen Intervallgrenze, und
wobei der Endzeitpunkt des in Schritt 1b) ermittelten kürzesten Zeitintervalls eines der Vergebührungsschritte die untere Intervallgrenze für die Durchführung des Schritts 1a) eines dem Vergebührungsschritt nachfolgenden Vergebührungsschritts ist.

2. Verfahren nach Anspruch 1, wobei die Endzeitpunkte nach absteigender Größe sortiert werden, und die Ermittlung des letzten der Endzeitpunkte durch Prüfung in der Reihenfolge der Sortierung erfolgt.

3. Verfahren nach einem der vorhergehenden Ansprüche 1 oder 2, wobei eine über eine obere Intervallgrenze des kürzesten der Zeitintervalle hinausgehende Restlänge eines Pulses einer Kostenfunktion ermittelt wird, wobei der Puls vor der oberen Intervallgrenze des Kürzesten der Zeitintervalle beginnt, und die Restlänge gespeichert wird, um die Kostenfunktion bei einem nachfolgenden Vergebührungsschritt um die Restlänge zu verschieben.

4. Verfahren nach einem der vorhergehenden Ansprüche 1 bis 3, wobei für jedes der Guthabenkonten die Gebühr in einem Vergebührungsschritt nur einmal berechnet wird.

5. Computerprogrammprodukt, insbesondere digitales Speichermedium, zur Vergebührung von Telekommunikationsdienstleistungen für einen Teilnehmer eines Telekommunikationsnetzes (102), wobei dem Teilnehmer mehrere Guthabenkonten (Bj) zugeordnet sind, und eine zeitlich veränderliche Zuordnung von Messgrößen der Telekommunikationsdienstleistungen zu den Guthabenkonten des Teilnehmers gegeben ist, und jede der Zuordnungen von Messgrößen zu Guthabenkonten eine Kostenfunktion mit einem gepulsten Tarif hat, mit Programmmitteln zur Vergebührung in zeitlich aufeinander folgenden Vergebührungsschritten, wobei die Programmmittel zur Durchführung der folgenden Schritte für jeden der Vergebührungsschritte ausgebildet sind:
a) für jedes der Guthabenkonten des Teilnehmers: Bestimmung eines Zeitintervalls von einer unteren Intervallgrenze ausgehend, für das die Kostenfunktion und die Zuordnungen von Meßgrößen zu dem Guthabenkonto unverändert sind und in dem ein Gebührenlimit des Guthabenkontos nicht überzogen wird,
b) Ermittlung des kürzesten der im Schritt 5 a) bestimmten Zeitintervalle,
c) Durchführung des Vergebührungsschrittes für das in Schritt 5 b) ermittelte kürzeste Zeitintervall,
wobei in jedem Vergebührungsschritt die Bestimmung einer oberen Intervallgrenze des Zeitintervalls, für das die Kostenfunktionen der Zuordnungen eines der Guthabenkonten unverändert sind, mit folgenden Schritten erfolgt:
- Bestimmung eines ersten Zeitpunkts, zu dem die Summe der Kostenfunktionen der Zuordnungen dieses Guthabenkontos das Gebührenlimit dieses Guthabenkontos erreicht,
- für jede der Kostenfunktionen einer Zuordnung dieses Guthabenkontos: Bestimmung eines Endzeitpunktes des letzten vollständigen Pulses vor Erreichen des ersten Zeitpunktes,
- Ermittlung des letzten der Endzeitpunkte, für den die Summe der Kostenfunktionen das Gebührenlimit nicht überschreitet als der oberen Intervallgrenze, und
wobei der Endzeitpunkt des in Schritt 5 b) ermittelten kürzesten Zeitintervalls eines der Vergebührungsschritte die untere Intervallgrenze für die Durchführung des Schritts 5 a) eines dem Vergebührungsschritt nachfolgenden Vergebührungsschritts ist..

6. Computerprogrammprodukt nach Anspruch 5, wobei die Programmmittel so ausgebildet sind, dass eine über eine obere Intervallgrenze des kürzesten der Zeitintervalle hinausgehende Restlänge eines Pulses einer Kostenfunktion ermittelt wird, wobei der Puls vor der oberen Intervallgrenze des Kürzesten der Zeitintervalle beginnt, und die Restlänge gespeichert wird, um die Kostenfunktion bei einem nachfolgenden Vergebührungsschritt um die Restlänge zu verschieben.

7. Vergebührungssystem zur Vergebührung einer Telekommunikationsdienstleistung mit:
a) Mitteln (108; 608) zur zeitlich veränderlichen Zuordnung von Messgrößen zu Guthabenkonten eines Teilnehmers, wobei jede der Zuordnungen eine Kostenfunktion mit einem gepulsten Tarif hat,
b) Mitteln (114; 614) zur Bestimmung eines Zeitintervalls, für das die Kostenfunktionen und die Zuordnungen von Meßgrößen zu dem Guthabenkonto unverändert sind und in dem ein Gebührenlimit des Guthabenkontos nicht überzogen wird,
c) Mitteln (114; 614) zur Ermittlung des kürzesten der Zeitintervalle der Guthabenkonten, aus den von den Mitteln zur Bestimmung eines Zeitintervalls bestimmten Zeitintervallen,
d) Mitteln (112; 612, 616) zur Durchführung eines Vergebührungsschrittes, der das kürzeste der Zeitintervalle abdeckt,
wobei die Mittel zur Bestimmung eines Zeitintervalls zur Bestimmung einer oberen Intervallgrenze des Zeitintervalls, für das die Kostenfunktionen der Zuordnungen eines der Guthabenkonten unverändert sind, zur Durchführung der folgenden Schritte ausgebildet sind:
- Bestimmung eines ersten Zeitpunkts, zu dem die Summe der Kostenfunktionen der Zuordnungen dieses Guthabenkontos das Gebührenlimit dieses Guthabenkontos erreicht,
- für jede der Kostenfunktionen einer Zuordnung dieses Guthabenkontos: Bestimmung eines Endzeitpunktes des letzten vollständigen Pulses vor Erreichen des ersten Zeitpunktes,
- Ermittlung des letzten der Endzeitpunkte, für den die Summe der Kostenfunktionen das Gebührenlimit nicht überschreitet als der oberen Intervallgrenze.

8. Vergebührungssystem nach Anspruch 7, mit Mitteln (616) zur Speicherung der Restlängen (506) von Pulsen verschiedener Kostenfunktionen, wobei die betreffenden Pulse vor einer oberen Intervallgrenze des Kürzesten der Zeitintervalle beginnen, und mit Mitteln (612) zur Verschiebung der Kostenfunktionen um die gespeicherten Restlängen bei einem nach dem kürzesten der Zeitintervalle erfolgenden Vergebührungsschritt.

## Claims

1. Method for charging telecommunications services for a subscriber of a telecommunications network (102), a plurality of prepaid accounts (Bj) being assigned to the subscriber, a time-variable allocation of measures of the telecommunications services to the prepaid accounts of the subscriber being provided and each of the allocations of measures to prepaid accounts having a cost function with a pulsed tariff, the charging being effected in time-successive charging steps and the following steps being carried out for each of the charging steps:
a) for each of the prepaid accounts of the subscriber: determination, starting from a lower interval limit, of a time interval for which the cost function and the allocations of measures to the prepaid account are unchanged and in which a charging limit of the prepaid account is not overdrawn,
b) ascertainment of the shortest of the time intervals determined in step 1a),
c) execution of the charging step for the shortest time interval ascertained in step 1b),
the determination of an upper interval limit of the time interval for which the cost functions of the allocations to one of the prepaid accounts are unchanged being carried out in each charging step with the following steps:
- determination of a first time point at which the sum of the cost functions of the allocations to this prepaid account reaches the charging limit of this prepaid account,
- for each of the cost functions of an allocation to this prepaid account: determination of a termination time of the last complete pulse before attainment of the first time point,
- ascertainment of the last of the termination times for which the sum of the cost functions does not exceed the charging limit as the upper interval limit, and
the termination time of the shortest time interval of one of the charging steps ascertained in step 1b) being the lower interval limit for the execution of step 1a) of a charging step which follows the charging step.

2. Method according to claim 1, **wherein** the termination times are sorted by decreasing magnitude and the ascertainment of the last of the termination times is effected by examination in the sorting sequence.

3. Method according to either of the preceding claims 1 and 2, wherein a residual length of a pulse of a cost function that exceeds an upper interval limit of the shortest of the time intervals is ascertained, the pulse beginning before the upper interval limit of the shortest of the time intervals and the residual length being stored in order to shift the cost function by the residual length in a following charging step.

4. Method according to any one of the preceding claims 1 to 3, wherein the charge in a charging step is calculated only once for each of the prepaid accounts.

5. Computer program product, in particular digital storage medium, for charging telecommunications services for a subscriber of a telecommunications network (102), a plurality of prepaid accounts (Bj) being assigned to the subscriber, a time-variable allocation of measures of the telecommunications services to the prepaid accounts of the subscriber being provided and each of the allocations of measures to prepaid accounts having a cost function with a pulsed tariff, with program means for charging in time-successive charging steps, the program means being configured for executing the following steps for each of the charging steps:
a) for each of the prepaid accounts of the subscriber: determination, starting from a lower interval limit, of a time interval for which the cost function and the allocations of measures to the prepaid account are unchanged and in which a charging limit of the prepaid account is not overdrawn,
b) ascertainment of the shortest of the time intervals determined in step 5a),
c) execution of the charging step for the shortest time interval ascertained in step 5b),
the determination of an upper interval limit of the time interval for which the cost functions of the allocations to one of the prepaid accounts are unchanged being executed in each charging step with the following steps:
- determination of a first time point at which the sum of the cost functions of the allocations to this prepaid account reaches the charging limit of this prepaid account,
- for each of the cost functions of an allocation to this prepaid account: determination of a termination time of the last complete pulse before attainment of the first time point,
- ascertainment of the last of the termination times for which the sum of the cost functions does not exceed the charging limit as the upper interval limit, and
the termination time of the shortest time interval of one of the charging steps ascertained in step 5b) being the lower interval limit for the execution of step 5a) of a charging step which follows the charging step.

6. Computer program product according to claim 5, wherein the program means are so configured that a residual length of a pulse of a cost function that exceeds an upper interval limit of the shortest of the time intervals is ascertained, the pulse beginning before the upper interval limit of the shortest of the time intervals and the residual length being stored in order to shift the cost function by the residual length in a following charging step.

7. Charging system for charging a telecommunications service, comprising:
a) means (108; 608) for the time-variable allocation of measures to prepaid accounts of a subscriber, each of the allocations having a cost function with a pulsed tariff,
b) means (114; 614) for determining a time interval for which the cost functions and the allocations of measures to the prepaid account are unchanged and in which a charging limit of the prepaid account is not overdrawn,
c) means (114; 614) for ascertaining the shortest of the time intervals of the prepaid accounts from among the time intervals determined by the means for determining a time interval,
d) means (112; 612, 616) for executing a charging step which covers the shortest of the time intervals,
the means for determining a time interval for determining an upper interval limit of the time interval for which the cost functions of the allocations to one of the prepaid accounts are unchanged being configured for executing the following steps:
- determination of a first time point at which the sum of the cost functions of the allocations to this prepaid account reaches the charging limit of this prepaid account,
- for each of the cost functions of an allocation to this prepaid account: determination of a termination time of the last complete pulse before attainment of the first time point,
- ascertainment of the last of the termination times for which the sum of the cost functions does not exceed the charging limit as the upper interval limit.

8. Charging system according to claim 7, comprising means (616) for storing the residual lengths (506) of pulses of different cost functions, the pulses concerned beginning before an upper interval limit of the shortest of the time intervals, and means (612) for shifting the cost functions by the stored residual lengths in a charging step which takes place after the shortest of the time intervals.

## Revendications

1. Procédé de taxation de prestations de service de télécommunication pour un abonné d'un réseau de télécommunication (102), dans lequel plusieurs comptes (Bj) sont associés à l'abonné, une affectation, variant dans le temps, des mesures de prestations de service de télécommunication étant associées aux comptes de l'abonné, chacune des affectations de mesures aux comptes ayant une fonction de calcul des coûts avec un tarif par impulsion, la taxation se faisant lors d'étapes de taxation se suivant dans le temps et les étapes suivantes étant réalisées pour chacune des étapes de taxation :
a) pour chacun des comptes de l'abonné :
détermination d'un intervalle de temps à partir d'une limite d'intervalle inférieure, pour lequel la fonction de calcul des coûts et les affectations de mesures au compte restent inchangées et pendant lequel une limite de taxation du compte n'est pas dépassée ;
b) calcul du plus petit intervalle de temps déterminé à l'étape 1 a) ;
c) réalisation de l'étape de taxation pour le plus petit intervalle de temps déterminé à l'étape 1 b) ;
à chaque étape de taxation, la détermination d'une limite d'intervalle supérieure de l'intervalle de temps pour lequel les fonctions de calcul des coûts des affectations d'un des comptes restent inchangées se faisant selon les étapes suivantes :
- détermination d'un premier instant auquel la somme des fonctions de calcul des coûts des affectations de ce compte atteint la limite de taxation de ce compte ;
- pour chacune des fonctions de calcul des coûts associées à ce compte : détermination d'un instant final de la dernière impulsion entière avant d'atteindre le premier instant ;
- calcul du dernier des instants finaux pour lequel la somme des fonctions de calcul des coûts ne dépasse pas la limite de taxation, en tant que limite d'intervalle supérieure ; et
l'instant final du plus petit intervalle de temps calculé à l'étape 1b) d'une des étapes de taxation étant la limite d'intervalle inférieure pour réaliser l'étape 1a) d'une étape de taxation suivant l'étape de taxation actuelle.

2. Procédé selon la revendication 1, dans lequel les instants finaux sont classés par ordre décroissant de taille et dans lequel le calcul du dernier des instants finaux se fait en vérifiant l'ordre du classement.

3. Procédé selon l'une quelconque des revendications précédentes 1 ou 2, dans lequel on calcule une longueur restante d'une impulsion d'une fonction de calcul des coûts qui dépasse une limite d'intervalle supérieure du plus court des intervalles de temps, l'impulsion commençant avant la limite d'intervalle supérieure du plus court des intervalles de temps et la longueur restante étant mémorisée pour décaler la fonction de calcul des coûts de la longueur restante lors d'une étape de taxation suivante.

4. Procédé selon l'une quelconque des revendications précédentes 1 à 3, dans lequel les coûts ne sont calculés qu'une fois pour chacun des comptes lors d'une étape de taxation.

5. Produit de programme informatique, notamment support de mémoire numérique, de taxation de prestations de service de télécommunication pour un abonné d'un réseau de télécommunication (102), dans lequel plusieurs comptes (Bj) sont associés à l'abonné, une affectation, variant dans le temps, des mesures de prestations de service de télécommunication étant associée aux comptes de l'abonné, chacune des affectations de mesures aux comptes ayant une fonction de calcul des coûts avec un tarif par impulsion, avec des moyens de programmation pour réaliser la taxation lors des différentes étapes de taxation se suivant dans le temps, les moyens de programmation étant configurés pour réaliser les étapes suivantes pour chacune des étapes de taxation :
a) pour chacun des comptes de l'abonné :
détermination d'un intervalle de temps à partir d'une limite d'intervalle inférieure, pour lequel la fonction de calcul des coûts et les affectations de mesures au compte restent inchangées et pendant lequel une limite de taxation du compte n'est pas dépassée ;
b) calcul du plus petit intervalle de temps déterminé à l'étape 5 a) ;
c) réalisation de l'étape de taxation pour le plus petit intervalle de temps déterminé à l'étape 5 b) ;
à chaque étape de taxation, la détermination d'une limite d'intervalle supérieure de l'intervalle de temps pour lequel les fonctions de calcul des coûts des affectations d'un des comptes restent inchangées se faisant selon les étapes suivantes :
- détermination d'un premier instant auquel la somme des fonctions de calcul des coûts des affectations de ce compte atteint la limite des coûts de ce compte ;
- pour chacune des fonctions de calcul des coûts associées à ce compte : détermination d'un instant final de la dernière impulsion entière avant d'atteindre le premier instant ;
- calcul du dernier des instants finaux pour lequel la somme des fonctions de calcul des coûts ne dépasse pas la limite de taxation, en tant que limite d'intervalle supérieure ; et
l'instant final du plus petit intervalle de temps calculé à l'étape 5 b) d'une des étapes de taxation étant la limite d'intervalle inférieure pour réaliser l'étape 5 a) d'une étape de taxation suivant l'étape de taxation actuelle.

6. Produit de programme informatique selon la revendication 5, dans lequel les moyens de programmation sont configurés de manière à calculer une longueur restante d'une impulsion d'une fonction de calcul des coûts qui dépasse une limite d'intervalle supérieure du plus court des intervalles de temps, l'impulsion commençant avant la limite d'intervalle supérieure du plus court des intervalles de temps et la longueur restante étant mémorisée pour décaler la fonction de calcul des coûts de la longueur restante lors d'une étape de taxation suivante.

7. Système de taxation pour taxer une prestation de service de télécommunication avec :
a) des moyens (108 ; 608) pour associer de manière variable dans le temps des mesures aux comptes d'un abonné, dans lesquels chacune des affectations a une fonction de calcul des coûts avec un tarif par impulsion ;
b) des moyens (114 ; 614) pour déterminer un intervalle de temps pour lequel les fonctions de calcul des coûts et les affectations de mesures au compte restent inchangées et dans lequel une limite de taxation du compte n'est pas dépassée ;
c) des moyens (114 ; 614) pour calculer le plus court des intervalles de temps des comptes, à partir des intervalles de temps déterminés par les moyens de détermination des intervalles de temps ;
d) des moyens (112 ; 612, 616) pour réaliser une étape de taxation qui couvre le plus petit intervalle de temps ;
les moyens de détermination des intervalles de temps servant à déterminer une limite d'intervalle supérieure de l'intervalle de temps pour lequel les fonctions de calcul des coûts des affectations d'un des comptes restent inchangées étant configurés de manière à réaliser les étapes suivantes :
- détermination d'un premier instant auquel la somme des fonctions de calcul des coûts des affectations de ce compte atteint la limite de taxation de ce compte ;
- pour chacune des fonctions de calcul des coûts associées à ce compte : détermination d'un instant final de la dernière impulsion entière avant d'atteindre le premier instant ;
- calcul du dernier des instants finaux pour lequel la somme des fonctions de calcul des coûts ne dépasse pas la limite de taxation, en tant que limite d'intervalle supérieure.

8. Système de taxation selon la revendication 7, avec des moyens (616) pour mémoriser les longueurs restantes (506) des impulsions de diverses fonctions de calcul des coûts, dans lequel les impulsions en question commencent avant une limite d'intervalle supérieure du plus petit des intervalles de temps et avec des moyens (612) pour décaler les fonctions de calcul des coûts des longueurs restantes mémorisées lors d'une étape de taxation ayant lieu après le plus petit des intervalles de temps.
